# EUROPEAN PATENT APPLICATION

(11) **EP 4 617 892 A1**
(43) Date of publication of application: **17.09.2025**
(21) Application number: 23888840.8
(22) Date of filing: 22.06.2023
(51) Int. Cl.: G06F 13/38

(54) **DEVICE AND METHOD FOR PERFORMING COMMUNICATION BETWEEN DIES**

(30) Priority: 09.11.2022 KR 20220148733; 16.12.2022 KR 20220176680
(71) Applicant: Electronics and Telecommunications Research Institute, Daejeon 34129 (KR)
(72) Inventor: HAN, Jin-Ho, Daejeon 34129 (KR); KWON, Young-Su, Daejeon 34129 (KR); KIM, Ju-Yeob, Daejeon 34129 (KR)
(74) Representative: Betten & Resch
(86) International application number: PCT/KR2023/008700
(87) International publication number: WO 2024/101571

(57) **Abstract**

A device for performing communication between dies according to an embodiment of the present disclosure may include a plurality of dies and a one-way communication module for performing communication between the dies by being embedded in each of the plurality of dies.

## Description

### Technical Field

The present disclosure relates generally to a device and method for performing communication between dies, and more particularly, to a device and method for efficient communication between dies in a semiconductor having a chiplet architecture.

This application claims the benefit of Korean Patent Applications No. 10-2022-0148733, filed November 9, 2022, and No. 10-2022-0176680, filed December 16, 2022, which are hereby incorporated by reference in their entireties into this application.

### Background Art

Recently, chiplets have emerged in order to overcome the performance limitations and high costs of existing monolithic chips. The chiplets are small component units or IP block units for forming a processor, and 'chiplet' is technology for making a processor using multiple chiplets performing different functions as building blocks, similar to Lego blocks.

In the existing technology, a single unit chip includes all functions therein such that it can operate independently, like a Multi-Chip Module (MCM). Because chiplets are formed by combining multiple chips, they may overcome a limitation in increasing the performance of a monolithic chip, which is caused due to limits on reticle sizes. Recently, performance limitations of monolithic chips have appeared due to the limits on the reticle sizes. A reticle is a photomask used for manufacturing a semiconductor.

In a semiconductor manufacturing process, after an oxide film is formed on a wafer, an electronic circuit is drawn on the oxide film, and an etching and wiring process is performed according to the electronic circuit. A reticle is a kind of drawing board that is used to draw an electronic circuit in the photolithography (photo) process. Because the maximum size of such a reticle is slightly over 800 mm², it is almost impossible to create a chip larger than the size.

It is possible to create a single large chip using multiple reticles, but it is difficult due to an alignment problem. In order to improve the performance of processors, Intel, AMD, and Nvidia have been continuously increasing the size of chips. However, they have already produced chips, the size of which reaches the limit of 800 mm², and are now trying to produce chiplets, which are combinations of multiple chips, for chips larger than that.

In conventional technology, die-to-die communication is performed using high-speed interconnects between dies, but the performance thereof is not as good as when CPU0 and NPUs 0/1/2 are on the same die, and die-to-die communication is not as fast as intra-die communication. This is because a communication bitwidth in die-to-die communication is not as large as that in intra-die communication and because the operating frequency of die-to-die communication is not high compared to intra-die communication.

### Disclosure

### Technical Problem

An object of the present disclosure is to provide a device and method for performing communication between dies in order to perform die-to-die communication without a decrease in communication speed.

### Technical Solution

In order to accomplish the above object, a device for performing communication between dies according to an embodiment may include a plurality of dies and a one-way communication module for performing communication between the dies by being embedded in each of the plurality of dies.

The die may include a master port and a slave port.

The one-way communication module may convert a request input through the slave port of the die into a packet including a die ID.

A one-way communication module receiving the packet may perform communication between the dies by comparing a destination die ID included in the packet with the die ID of the one-way communication module receiving the packet.

When the destination die ID included in the packet is the same as the ID of the die in which the one-way communication module receiving the packet is embedded, the one-way communication module receiving the packet may transfer the packet to the master port of the die in which the one-way communication module receiving the packet is embedded.

When the destination die ID included in the packet differs from the ID of the die in which the one-way communication module receiving the packet is embedded, the one-way communication module receiving the packet may transfer the packet to a one-way communication module embedded in a die adjacent to the one-way communication module receiving the packet.

The die may include a master interface for communication between the master port and the one-way communication module and a slave interface for communication between the slave port and the one-way communication module.

The one-way communication module may include a first FIFO, which performs transmission and reception with the master port through the master interface, and a second FIFO, which performs transmission and reception with the slave port through the slave interface.

The one-way communication module may include an arbiter for arbitration of transmission and reception of packets.

The packet may include at least one of a source die ID, a destination die ID, read/write, a data length, a burst length, a 48-bit address, an MSB/LSB, or 128-bit data, or a combination thereof.

The request may be a read or write request.

In order to accomplish the above object, a method for performing communication between dies according to an embodiment may include converting a request into a packet including a die ID and determining, by a one-way communication module receiving the packet, whether to transmit the packet by comparing a destination die ID included in the packet with the die ID of the one-way communication module receiving the packet.

When the destination die ID included in the packet is the same as the ID of a die in which the one-way communication module receiving the packet is embedded, the one-way communication module receiving the packet may transfer the packet to the master port of the die in which the one-way communication module receiving the packet is embedded.

When the destination die ID included in the packet differs from the ID of a die in which the one-way communication module receiving the packet is embedded, the one-way communication module receiving the packet may transfer the packet to a second one-way communication module adjacent to the one-way communication module receiving the packet.

The request may be a read or write request.

### Advantageous Effects

An embodiment uses an on-chip communication protocol without change and enables communication between different dies without a decrease in communication speed.

### Description of Drawings

FIG. 1 is a block diagram illustrating the configuration of a device for performing communication between dies according to an embodiment.
FIG. 2 is a block diagram illustrating the configuration of a one-way communication module according to an embodiment.
FIG. 3 is a flowchart illustrating a method for performing communication between dies according to an embodiment.
FIG. 4 is a block diagram illustrating the configuration of a computer system according to an embodiment.

### Best Mode

The advantages and features of the present disclosure and methods of achieving them will be apparent from the following exemplary embodiments to be described in more detail with reference to the accompanying drawings. However, it should be noted that the present disclosure is not limited to the following exemplary embodiments, and may be implemented in various forms. Accordingly, the exemplary embodiments are provided only to disclose the present disclosure and to let those skilled in the art to which the present disclosure pertains know the category of the present disclosure, and the present disclosure is to be defined based only on the claims. The same reference numerals or the same reference designators denote the same elements throughout the specification.

It will be understood that, although the terms "first," "second," etc. may be used herein to describe various elements, these elements are not intended to be limited by these terms. These terms are only used to distinguish one element from another element. For example, a first element discussed below could be referred to as a second element without departing from the technical spirit of the present disclosure.

The terms used herein are for the purpose of describing particular embodiments only and are not intended to limit the present disclosure. As used herein, the singular forms are intended to include the plural forms as well, unless the context clearly indicates otherwise. It will be further understood that the terms "comprises," or "comprising," when used herein, specify the presence of stated components or steps, but do not preclude the presence or addition of one or more other components, steps, and/or groups thereof.

Unless differently defined, all terms used herein have the same meanings as terms generally understood by those skilled in the art to which the present disclosure pertains. Terms identical to those defined in generally used dictionaries are not to be interpreted as having ideal or excessively formal meanings unless they are definitively defined in the present specification.

In the present specification, each of expressions such as "A or B", "at least one of A and B", "at least one of A or B", "at least one of A, B, and C", and "at least one of A, B, or C" may include any one of the items listed in the expression or all possible combinations thereof.

Hereinafter, embodiments of the present disclosure will be described in detail with reference to the accompanying drawings. In the following description of the present disclosure, the same reference numerals are used to designate the same or similar elements throughout the drawings, and repeated descriptions of the same elements will be omitted.

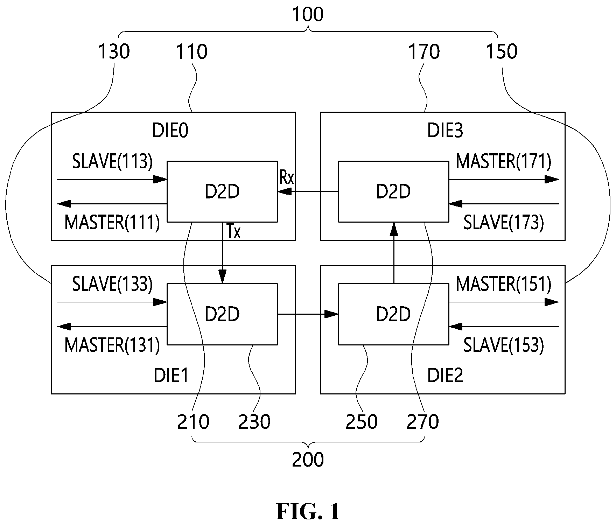

FIG. 1 is a block diagram illustrating the configuration of a device for performing communication between dies according to an embodiment.

Referring to FIG. 1, the device for performing communication between dies according to an embodiment may include a die 100 and a one-way communication module 200 embedded in the die 100.

The die 100 may comprise a plurality of dies. The die 100 may include a first die 110, a second die 130, a third die 150, and a fourth die 170, and the number of dies is not limited. The die 100 may be formed in a polygonal shape, but the shape thereof is not limited. The die 100 may include a CPU or at least one GPU embedded therein.

The first die 110 may perform one-way communication with the second die 130 or the fourth die 170. The second die 130 may perform one-way communication with the first die 110 or the third die 150. The third die 150 may perform one-way communication with the second die 130 or the fourth die 170. The fourth die 170 may perform one-way communication with the first die 110 or the third die 150.

Communication between the dies 100 may be performed using the one-way communication module 200. The one-way communication module 200 may be for die-to-die (D2D) communication. The D2D communication is technology capable of performing direct communication between the dies 100 without passing through other infrastructures. The D2D communication may efficiently reuse wireless frequencies and minimize power consumption.

The one-way communication module 200 may comprise a plurality of one-way communication modules. The one-way communication module 200 may include a first one-way communication module 210, a second one-way communication module 230, a third one-way communication module 250, and a fourth one-way communication module 270, and the number of one-way communication modules is not limited. The one-way communication module 200 may include a transmission channel and a reception channel.

The first one-way communication module 210 may be embedded in the first die 110. The second one-way communication module 230 may be embedded in the second die 130. The third one-way communication module 250 may be embedded in the third die 150. The fourth one-way communication module 270 may be embedded in the fourth die 170.

The first one-way communication module 210 may perform communication between the first die 110 and the second die 130. Transmission from the first die 110 to the second die 130 may be performed through the transmission channel of the first one-way communication module 210. The first one-way communication module 210 may perform communication between the fourth die 170 and the first die 110. Reception from the fourth die 170 to the first die 110 may be performed through the reception channel of the first one-way communication module 210.

The second one-way communication module 230 may perform communication between the second die 130 and the third die 150. Transmission from the second die 130 to the third die 150 may be performed through the transmission channel of the second one-way communication module 230. The second one-way communication module 230 may perform communication between the first die 110 and the second die 130. Reception from the first die 110 to the second die 130 may be performed through the reception channel of the second one-way communication module 230.

The third one-way communication module 250 may perform communication between the third die 150 and the fourth die 170. Transmission from the third die 150 to the fourth die 170 may be performed through the transmission channel of the third one-way communication module 250. The third one-way communication module 250 may perform communication between the second die 130 and the third die 150. Reception from the second die 130 to the third die 150 may be performed through the reception channel of the third one-way communication module 250.

The fourth communication module 170 may perform communication between the fourth die 170 and the first die 110. Transmission from the fourth die 170 to the first die 110 may be performed through the transmission channel of the fourth one-way communication module 170. The fourth communication module 170 may perform communication between the third die 150 and the fourth die 170. Reception from the third die 150 to the fourth die 170 may be performed through the reception channel of the fourth one-way communication module 270.

The first die 110 may include a master port 111 and a slave port 113 therein. Each of the second to fourth dies may include a master port and a slave port therein.

When a packet is transmitted from the first die 110 to the third die 150, the packet may be sequentially transmitted in the order of the first die 110, the second die 130, and the third die 150. The packet may include source die ID information and destination die ID information. The source die ID information and the destination die ID information may be analyzed by the one-way communication module.

The one-way communication module 200 has die ID information of the die in which the one-way communication module is included, and determines whether the destination die ID information matches the die ID information thereof. When it determines that the destination die ID information matches the die ID information thereof, the one-way communication module 200 sends the packet to the master port of the die.

Conversely, when it determines that the destination die ID information does not match the die ID information thereof, the one-way communication module 200 may transfer the packet to the next die through the transmission channel of the one-way communication module 200.

A read/write request input through the slave port in the die 100 may be converted into a packet along with the corresponding die ID through address analysis. The packet may be transmitted through the transmission channel of the one-way communication module. A request from the slave port of the second die 130 to the fourth die 170 may be sequentially transferred in the order of the second die 130, the third die 150, the fourth die 170, and the first die 110.

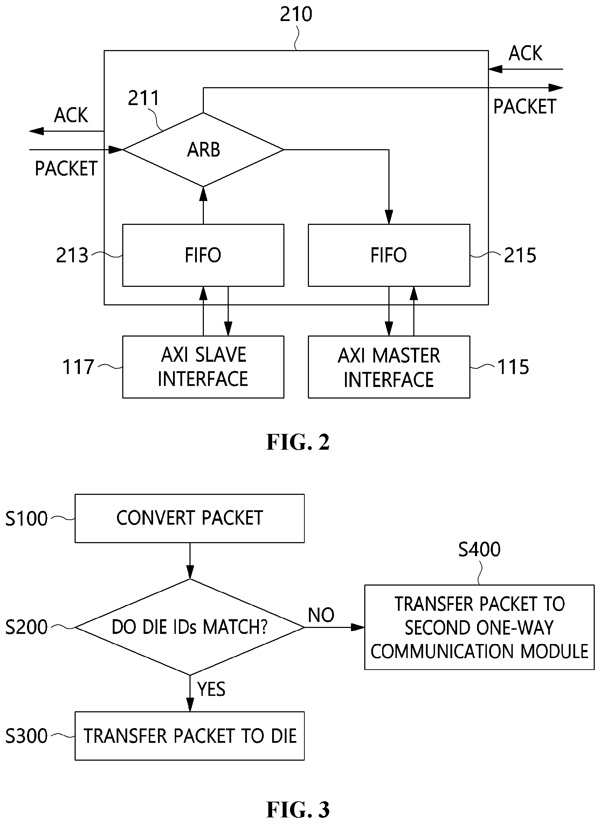

FIG. 2 is a block diagram illustrating the configuration of a one-way communication module according to an embodiment.

Referring to FIG. 2, the one-way communication module 200 according to an embodiment may include an arbiter 201, a first First-In First-Out (FIFO) 203, and a second FIFO 205.

The one-way communication module 200 may include a reception channel for receiving a packet from the outside of the die and outputting an acknowledgement (ack) and a transmission channel for sending a packet and receiving an acknowledgement input thereto. The die may include an Advanced eXtensible Interface (AXI) master interface 115 and an AXI slave interface 117.

A request of the reception channel by the arbiter 201 and a request through the AXI slave interface 117 are buffered in the one-way communication module 200 by the first FIFO 203.

First, transactions are received as input through the reception channel and the AXI slave interface 117, stored in the first FIFO 203, and arbitrated in a round robin manner by the arbiter 201. Transmission from the reception channel to the AXI master interface 115 and transmission from the AXI slave interface 117 to the transmission channel may be performed at the same time.

A packet may be configured as follows:
- Packet Type 0
   {Source Die ID, Destination Die ID, Read/Write, Data Length, Burst Length, 48-bit Address}
- Packet Type 1
   {Source Die ID, Destination Die ID, MSB/LSB, 128-bit Data}

The packet may include the following information:
- Source Die ID: the D2D die ID of a die that generated the corresponding packet by the AXI slave interface
- Destination Die ID: the D2D die ID of a die having the AXI master interface to which the packet has to be sent
- Read/Write: a read transaction or a write transaction
- Data Length: the data bitwidth of 8-bit/16-bit/32-bit/64-bit/128-bit/256-bit
- Burst Length: the number of pieces of data: 1, 2, 4, 8, 16, 32
- 48-bit Address: a read or write address
- MSB/LSB: an MSB or an LSB when up to 256 bits are transmitted
- 128-bit data: 8-bit, 16-bit, 32-bit, 64-bit, 128-bit data

The one-way communication module 200 converts a signal of the AXI slave interface 117 into a packet, as described above. Also, an AXI packet is converted into a signal of the AXI master interface 115. Conversion is performed when data is stored in the FIFOs 202 and 205, and up to 256 pieces of 256-bit data are converted into 512 packets.

Through this process, a transaction inside the die is converted into a transaction outside the die, and considering the small communication bitwidth and the communication operation frequency outside the die, which is lower than that inside the die, a maximum burst length is set to 32 and up to 128 bits are transmitted, whereby the communication channel between the dies is prevented from being occupied by a single transaction for a long period of time. Also, the structure for communication between dies may be configured merely by securing a channel through which a packet carrying up to 128 bits of data can be transmitted unidirectionally.

FIG. 3 is a flowchart illustrating a method for performing communication between dies according to an embodiment.

The method for performing communication between dies according to an embodiment may be performed by a one-way communication module.

The one-way communication module may convert a request into a packet including a die ID at step S100. The one-way communication module may transmit the packet to the next one-way communication module.

The one-way communication module receiving the packet may determine whether to transmit the packet by comparing the destination die ID included in the packet with the die ID of the one-way communication module receiving the packet at step S200.

When the destination die ID included in the packet is the same as the ID of the die in which the one-way communication module receiving the packet is embedded, the one-way communication module receiving the packet may transfer the packet to the master port of the die, in which the one-way communication module receiving the packet is embedded, at step S300.

When the destination die ID included in the packet differs from the ID of the die in which the one-way communication module receiving the packet is embedded, the one-way communication module receiving the packet may transfer the packet to a one-way communication module embedded in a die adjacent to the one-way communication module receiving the packet at step S400.

The one-way communication module according to an embodiment may be implemented in a computer system such as a computer-readable recording medium.

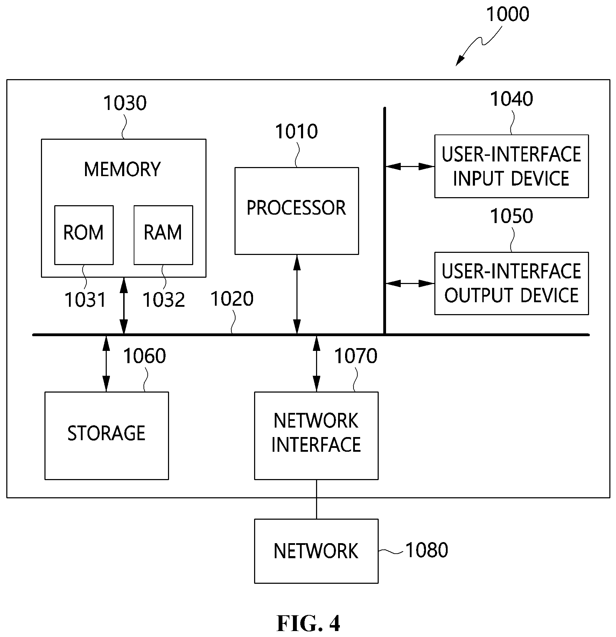

FIG. 4 is a block diagram illustrating the configuration of a computer system according to an embodiment.

Referring to FIG. 4, the computer system 1000 according to an embodiment may include one or more processors 1010, memory 1030, a user-interface input device 1040, a user-interface output device 1050, and storage 1060, which communicate with each other via a bus 1020. Also, the computer system 1000 may further include a network interface 1070 connected to a network.

The processor 1010 may be a central processing unit or a semiconductor device for executing a program or processing instructions stored in the memory or the storage. The processor 1010 is a kind of central processing unit, and may control the overall operation of the one-way communication module.

The processor 1010 may include all kinds of devices capable of processing data. Here, the 'processor' may be, for example, a data-processing device embedded in hardware, which has a physically structured circuit in order to perform functions represented as code or instructions included in a program. Examples of the data-processing device embedded in hardware may include processing devices such as a microprocessor, a central processing unit (CPU), a processor core, a multiprocessor, an application-specific integrated circuit (ASIC), a field-programmable gate array (FPGA), and the like, but are not limited thereto.

The memory 1030 may store various kinds of data for overall operation, such as a control program, and the like, for performing a communication method of the one-way communication module according to an embodiment. Specifically, the memory may store multiple applications running in the one-way communication module and data and instructions for operation of the one-way communication module.

The memory 1030 and the storage 1060 may be storage media including at least one of a volatile medium, a nonvolatile medium, a detachable medium, a non-detachable medium, a communication medium, or an information delivery medium, or a combination thereof. For example, the memory 1030 may include ROM 1031 or RAM 1032.

Specific implementations described in the present disclosure are embodiments and are not intended to limit the scope of the present disclosure. For conciseness of the specification, descriptions of conventional electronic components, control systems, software, and other functional aspects thereof may be omitted. Also, lines connecting components or connecting members illustrated in the drawings show functional connections and/or physical or circuit connections, and may be represented as various functional connections, physical connections, or circuit connections that are capable of replacing or being added to an actual device. Also, unless specific terms, such as "essential", "important", or the like, are used, the corresponding components may not be absolutely necessary for application of the present disclosure.

Accordingly, the spirit of the present disclosure should not be construed as being limited to the above-described embodiments, and the entire scope of the appended claims and their equivalents should be understood as defining the scope and spirit of the present disclosure.

## Claims

1. A device for performing communication between dies, comprising: a plurality of dies; and
a one-way communication module for performing communication between the dies by being embedded in each of the plurality of dies.

2. The device of claim 1, wherein the die includes a master port and a slave port.

3. The device of claim 2, wherein the one-way communication module converts a request input through the slave port of the die into a packet including a die ID.

4. The device of claim 3, wherein a one-way communication module receiving the packet compares a destination die ID included in the packet with a die ID of the one-way communication module receiving the packet.

5. The device of claim 4, wherein, when the destination die ID included in the packet is identical to an ID of a die in which the one-way communication module receiving the packet is embedded, the one-way communication module receiving the packet transfers the packet to a master port of the die in which the one-way communication module receiving the packet is embedded.

6. The device of claim 4, wherein, when the destination die ID included in the packet differs from an ID of a die in which the one-way communication module receiving the packet is embedded, the one-way communication module receiving the packet transfers the packet to a one-way communication module embedded in a die adjacent to the one-way communication module receiving the packet.

7. The device of claim 2, wherein the die includes a master interface for communication between the master port and the one-way communication module and a slave interface for communication between the slave port and the one-way communication module.

8. The device of claim 7, wherein the one-way communication module includes a first FIFO, which performs transmission and reception with the master port through the master interface, and a second FIFO, which performs transmission and reception with the slave port through the slave interface.

9. The device of claim 7, wherein the one-way communication module includes an arbiter for arbitration of transmission and reception of packets.

10. The device of claim 3, wherein the packet includes at least one of a source die ID, a destination die ID, read/write, a data length, a burst length, a 48-bit address, an MSB/LSB, or 128-bit data, or a combination thereof.

11. The device of claim 3, wherein the request is a read or write request.

12. A method for performing communication between dies, comprising:
converting a request into a packet including a die ID; and
determining, by a one-way communication module receiving the packet, whether to transmit the packet by comparing a destination die ID included in the packet with a die ID of the one-way communication module receiving the packet.

13. The method of claim 12, wherein, when the destination die ID included in the packet is identical to an ID of a die in which the one-way communication module receiving the packet is embedded, the one-way communication module receiving the packet transfers the packet to a master port of the die in which the one-way communication module receiving the packet is embedded.

14. The method of claim 12, wherein, when the destination die ID included in the packet differs from an ID of a die in which the one-way communication module receiving the packet is embedded, the one-way communication module receiving the packet transfers the packet to a second one-way communication module adjacent to the one-way communication module receiving the packet.

15. The method of claim 12, wherein the request is a read or write request.
